# EUROPÄISCHE PATENTSCHRIFT

(11) **EP 1 072 465 B1**
(45) Veröffentlichungstag und Bekanntmachung des Hinweises auf die Patenterteilung: **10.08.2005**
(21) Anmeldenummer: 00112943.6
(22) Anmeldetag: 20.06.2000
(51) Int. Cl.: B60N 2/66, B60N 2/44, A47C 7/46

(54) **Konturverstellbarer Sitz, insbesondere Fahrzeugsitz**
Vehicle seat with adjustable profile
Siège de voiture à profil réglable

(30) Priorität: 27.07.1999 DE 19934472
(43) Veröffentlichungstag der Anmeldung: 31.01.2001
(73) Patentinhaber: DaimlerChrysler AG, 70567 Stuttgart (DE)
(72) Erfinder: Orizaris, Vasilios, 71272 Renningen (DE); Schrader, Jürgen, 71093 Weil im Schönbuch (DE); Schroeder, Wolfram, Tuscaloosa, Alabama 35405 (US)

(56) Entgegenhaltungen:
- DE-A- 3 804 848
- DE-C- 4 331 663
- DE-C- 19 534 660
- US-A- 4 634 179

## Beschreibung

Die Erfindung betrifft einen konturverstellbaren Sitz, insbesondere Fahrzeugsitz, gemäß dem Oberbegriff des Patentanspruchs 1.

Bei einem bekannten Fahrzeugsitz dieser Art (DE 195 34 660 C1) sind zur Einstellung einer gewünschten Sitzkontur im Lordosebereich der Rückenlehne in diesem Rückenlehnenbereich drei Luftkissen in Lehnenhöhe gesehen übereinander angeordnet, die von dem Steuergerät zur Fülldruckeinstellung und zum Fülldruckhalten getrennt angesteuert werden. Die Bedieneinheit weist eine erste Befehlstaste zur Auslösung einer Druckerhöhung und eine zweite Befehlstaste zur Auslösung einer Druckreduzierung sowie einen Bereichswahlschalter auf, durch den neben drei Luftkissen im Lordosebereich noch zwei Luftkissen im Schulterbereich der Rückenlehne und zwei Luftkissen im Seitenbereich wahlweise zur Ansteuerung durch die beiden Befehlstasten aufrufbar sind. Zur Erzielung einer gewünschten Sitzkontur im Lordosebereich werden die Luftkissen zeitversetzt zyklisch gemäß einer vorgegebenen, periodisch zwischen einem Maximaldruck und einem Minimaldruck verlaufenden Druckkennlinien druckbeaufschlagt, wobei eine Druckansteuerung des nachsten Luftkissens zu oder vor dem Zeitpunkt beginnt, zu dem in dem vorhergehenden Luftkissen der Minimaldruck erreicht ist.

Bei einem ebenfalls bekannten Fahrzeugsitz (DE 43 31 663 C1) ist in der Bedieneinheit ein Druckwahl-Wippschalter und ein Durchlaufschalter vorhanden. Mit dem Durchlaufschalter wird derjenige Sitzbereich, z.B. der Lordosebereich der Rückenlehne, angewählt, in dem eine Konturverstellung durchgeführt werden soll, und durch Betätigung des Wippschalters in die eine oder andere Richtung wird in den im ausgewählten Sitzbereich sich befindlichen Luftkissen der Fülldruck erhöht bzw. erniedrigt, wodurch sich die Sitzkontur und die Sitzunterstützung für den Sitzenden verändert.

Der Erfindung liegt die Aufgabe zugrunde, eine einfache und logisch zu bedienende Konturverstellung im Lordosebereich der Rückenlehne zu schaffen, die eine optimale Rückenunterstützung für den Sitzenden bietet.

Die Aufgabe ist erfindungsgemäß durch die Merkmale des Patentanspruchs 1 gelöst.

Der erfindungsgemäße Sitz hat den Vorteil, daß dem Benutzer die Möglichkeit gegeben wird, mittels eines Paars von Befehlstasten eine Druckverteilung in mehreren beliebigen Luftkissen innerhalb des Lordosebereichs vorzuwählen und damit eine gewünschte Lordosekontur einzustellen und mit dem zweiten Paar von Befehlstasten dann die Intensität, d.h. den Wölbunosgrad, der gewählten Kontur zu verändern. Bei der Vorwahl der Druckverteilung in den Luftkissen wird dabei der Fülldruck der Luftkissen nicht an deren maximalen Fülldruck herangeführt, sondern nur soweit, daß der Benutzer einen Druckpunkt an der gewünschten Position spürt und damit seinen individuellen Konturverlauf spürt. Die so "aufgespürte" individuelle Kontur wird dann mittels Betätigung des anderen Paars der Befehlstasten verstärkt oder vermindert, so daß der Wölbungsgrad des Konturverlaufs verstärkt oder reduziert wird, nicht jedoch der zuvor eingestellte Konturverlauf. Bei dem erfindungsgemäßen Sitz kann damit eine sehr einfache und doch orthopädisch wirksame großflächige Konturverteilung erreicht werden, ohne daß der Benutzer eine Vielzahl von Einstellungen an der Bedieneinheit vornehmen muß.

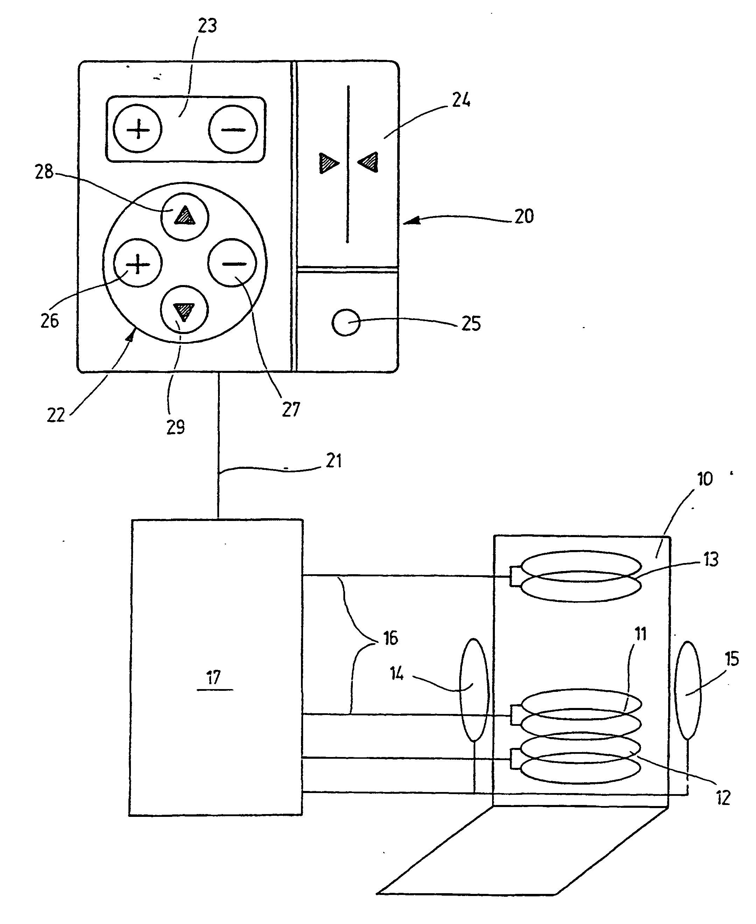

Die Erfindung ist anhand eines in der Zeichnung dargestellten Ausführungsbeispiels im folgenden näher beschrieben. Dabei zeigt die Zeichnung ein schematisches Blockschaltbild eines konturverstellbaren Fahrzeugsitzes.

Der in der Zeichnung in Blockdiagrammform gezeigte Fahrzeugsitz als Ausführungsbeispiel für einen allgemein verwendbaren Sitz, weist eine Rückenlehne 10 auf, in der mehrere Luftkissen integriert sind. Dabei sind zwei Luftkissen 11 und 12 im Lordosebereich der Rückenlehne in Lehnenhöhe gesehen übereinander angeordnet, ein Luftkissen 13 im Schulterbereich integriert und zwei Luftkissen 14,15 im Seitenbereich der Rückenlehne 10 vorgesehen. Die Luftkissen 11 - 13 im Lordose- und Schulterbereich weisen zur Erzielung einer möglichst homogenen, flächigen Kissenkontur jeweils zwei getrennte Luftkammern auf, die in Lehnenhöhe gesehen übereinander liegen. Die Luftkissen 11 - 15 werden über einen Satz von vier Pneumatikleitungen 16 von einem Steuergerät 17 mit Druckluft beaufschlagt, wozu das Steuergerät ein hier nicht daraestelltes Druckluftbehältnis mit einem ausreichenden Puffervolumen aufweist. Die beiden Luftkissen 14,15 im Seitenbereich werden über eine gemeinsame Pneumatikleitung 16 befüllt bzw. entleert, und auch die Luftkammern in den Luftkissen 11 - 13 werden über je eine Pneumatikleitung 16 gemeinsam angesteuert. Wie hier nicht weiter dargestellt ist, erhält das Steuergerät 17 die benötigten Informationen über den Fülldruck in den einzelnen Luftkissen 11 - 15 von Drucksensoren, die in den Pneumatikleitungen 16 angeordnet sind.

Eine Bedieneinheit 20 dient als Benutzerschnittstelle zur Eingabe von Benutzerbefehlen, die über einen elektrischen Leitungssatz 21 an das Steuergerät 17 übertragen werden. Als Bedienelemente sind in der Bedieneinheit 20 eine Kreuzwippe 22, ein Wipptaster 23 und ein Wippschalter 24 vorgesehen. Eine Leuchtdiode 25 dient zur Anzeige des Betriebszustands der Bedieneinheit 20. Mittels der Kreuzwipppe 22 werden die Luftkissen 11,12 im Lordosebereich, mittels des Wipptasters 23 das Luftkissen 13 im Schulterbereich und mittels des Wippschalters 24 die beiden Luftkissen 14,15 in den Seitenbereichen der Rückenlehne 10 angesteuert. Wird dabei auf dem Wipptaster 23 das "+"-Symbol gedrückt, so wird der Luftdruck in dem Luftkissen 13 erhöht, wird das "-"-Symbol gedrückt, so wird der Fülldruck im Luftkissen 13 reduziert. In gleicher Weise wird mit dem Wippschalter 24 der Fülldruck in den Luftkissen 14,15 in den Seitenbereichen der Rückenlehne 10 verändert.

Die Kreuzwippe 22 umfaßt insgesamt vier Befehlstasten 26 - 29. Wird die erste Befehlstaste 26 ("+"-Symbol) gedrückt, so wird der Fülldruck in beiden Luftkissen 11,12 erhöht, wobei der Befüllvorgang abgebrochen wird, wenn in einem der beiden Luftkissen 11,12 der maximale Fülldruck erreicht ist. Wird die Befehlstaste 27 ("-"-Symbol) gedrückt, so wird der Fülldruck in den Luftkissen 11,12 reduziert, wobei der Entleerungsvorgang abgebrochen wird, sobald der Fülldruck in einem der beiden Luftkissen 11,12 einen vorgegebenen minimalen Wert erreicht hat. Im Ausführungsbeispiel ist der maximale Fülldruck im oberen Luftkissen 11 auf 150 hPa und im unteren Luftkissen 12 auf 200 hPa festgelegt ist, während der minimale Fülldruck in jedem Luftkissen 11,12 15 hPa beträgt. Werden die beiden Befehlstasten 28,29 mit dem Pfeilsymbol betätigt, so wird das Verhältnis der Fülldrücke in den beiden Luftkissen 11,12 zueinander verändert, wobei mit Betätigen der dritten Befehlstaste 28 (aufwärtsgerichtetes Pfeilsymbol) eine Vergrößerung und der vierten Befehlstaste 29 (abwärtsgerichtetes Pfeilsymbol) eine Verkleinerung des Druckverhältnisses ausgelöst wird. Das Steuergerät 17 verändert dabei das Druckverhältnis so lange, wie die jeweilige Befehltstaste 28,29 gedrückt ist und ein bestimmter Druckzustand in den Luftkissen 11,12 noch nicht erreicht ist. Aus sitzergonomischen Gründen ist bei der Einstellung des Druckverhältnisses zwischen den Luftkissen 11,12 durch das Steuergerät 17 sichergestellt, daß das Verhältnis des Fülldrucks im oberen Luftkissen 11 zum Fülldruck im unteren Luftkissen 12 niemals kleiner als 0,25 ist.

Bei Betätigung der Kreuzwippe 22 durch den Benutzer laufen im einzelnen folgende Vorgänge ab:

Wird die dritte Befehlstaste 28 betätigt, so verändert sich die Lehnenkontur im Lordosebereich durch Vergrößern des Druckverhältnisses vom oberen Luftkissen 11 zum unteren Luftkissen 12, wobei sich der vom Benutzer fühlbare Druckpunkt nach oben verschiebt. Hierzu wird zunächst das untere Luftkissen entleert und mit Unterschreiten eines vorgegebenen Übergabedruckwerts (im Ausführungsbeispiel 140 hPa) zusätzlich das obere Luftkissen 11 befüllt. Die Befüllung des oberen Luftkissens wird abgebrochen, wenn 70% des maximalen Fülldrucks (im Ausführungsbeispiel 150 hPa) erreicht sind. Ebenso wird die Entleerung des unteren Luftkissens 12 gestoppt, sobald der minimale Fülldruck (im Ausführungsbeispiel 15 hPa) erreicht wird. Wird die vierte Befehlstaste 29 betätigt, so verändern sich die Lehnenkontur im Lordosebereich der Rückenlehne 10 durch Verkleinern des Druckverhältnisses vom oberen Luftkissen 11 zum unteren Luftkissen 12, wobei sich der vom Benutzer fühlbare Druckpunkt nach unten verschiebt. Hierzu werden gleichzeitig das obere Luftkissen 11 entleert und das untere Luftkissen 12 befüllt. Der Befüllvorgang des unteren Luftkissens 12 wird abgebrochen, sobald der Fülldruck im unteren Luftkissen 12 80% des maximalen Fülldrucks (im Ausführungsbeispiel 200 hPa) erreicht hat, und die Entleerung des oberen Luftkissens 11 wird gestoppt, sobald der Fülldruck den vorgebenen minimalen Druckwert (im Ausführungsbeispiel 15 hPa) erreicht. Durch diese, nicht an den maximalen Enddruck geführte Druckeinstellung in den beiden Luftkissen 11,12 des Lordosebereichs spürt der Benutzer einen Druckpunkt an einer von ihm gewünschten Position und kann damit einen für ihn angenehmen Konturenverlauf des Lordosebereichs einstellen.

Die weitere Intensitätseinstellung der gewählten Kontur und damit deren Wölbungsgrad wird nunmehr vom Benutzer durch Betätigen der Befehlstaste 26,27 herbeigeführt.

Solange der Benutzer die erste Befehlstaste 26 betätigt, werden die beiden Luftkissen 11,12 gleichzeitg befüllt. Die Befüllung wird gestoppt, sobald in einem der beiden Luftkissen 11,12 deren maximal zugelassener Fülldruck erreicht ist (im Ausführungsbeispiel für das obere Luftkissen 11 150 hPa und für das untere Luftkissen 12 200 hPa). Betätigt der Benutzer hingegen die zweite Befehlstaste 27, so werden - solange die zweite Befehlstaste 27 betätigt gehalten wird - beide Luftkissen 11,12 gleichzeitig entleert, wobei der Vorgang abgebrochen wird, wenn in einem der beiden Luftkissen 11,12 dessen vorgegebener minimaler Fülldruck erreicht wird (im Ausführungsbeispiel für beide Luftkissen 11,12 15 hPa).

## Patentansprüche

1. Konturverstellbarer Sitz, insbesondere Fahrzeugsitz, mit einer Rückenlehne (10) und in deren Lordosebereich, in Lehnenhöhe gesehen, übereinander angeordneten Luftkissen (11,12) zur Bildung einer Lordosekontur, mit einem Steuergerät (17) zur Steuerung des Fülldrucks in den Luftkissen (11,12) und mit einer an dem Steuergerät (17) angeschlossenen Bedieneinheit (20), die eine erste Befehlstaste (26) zur Auslösung einer Druckerhöhung und eine zweite Befehlstaste (27) zur Auslösung einer Druckreduzierung in den Luftkissen (11,12) aufweist,
**dadurch gekennzeichnet,**
**daß** die Bedieneinheit (20) eine dritte und vierte Befehlstaste (28,29) aufweist und daß das Steuergerät (17) so ausgebildet ist, daß mit Betätigen der dritten oder vierten Befehlstaste (28,29) das Verhältnis der Fülldrücke in den Luftkissen (11,12) zueinander verändert wird und mit Betätigen der ersten oder zweiten Befehlstaste (26,27) die Luftdrücke in den Luftkissen (11,12) bei unverändertem Fülldruckverhältnis gleichzeitig verändert werden.

2. Sitz nach Anspruch 1,
**dadurch gekennzeichnet,**
**daß** die Luftkissen (11,12) bei Betätigen der ersten Befehlstaste (26) gleichzeitig befüllt und bei Betätigen der zweiten Befehlstaste (27) gleichzeitig entleert werden.

3. Sitz nach Anspruch 2,
**dadurch gekennzeichnet,**
**daß** die Befüllung der Luftkissen (11,12) gestoppt wird, sobald in einem der Luftkissen (11,12) dessen maximal zugelassener Fülldruck erreicht ist, und daß die Entleerung gestoppt wird, sobald in einem der Luftkissen (11,12) dessen vorgegebener minimaler Fülldruck erreicht ist.

4. Sitz nach einem der Ansprüche 1 - 3,
**dadurch gekennzeichnet,**
**daß** die Betätigung der dritten Befehlstaste (28) eine Vergrößerung und die Betätigung der vierten Befehlstaste (29) eine Verkleinerung des Druckverhältnisses der Fülldrücke in den Luftkissen (11,12) auslöst.

5. Sitz nach Anspruch 4,
**dadurch gekennzeichnet,**
**daß** zwei Luftkissen (11,12) vorgesehen sind und daß das Steuergerät (17) so konzipiert ist, daß bei Betätigen der dritten Befehlstaste (28) zunächst das untere Luftkissen (12) entleert und mit Unterschreiten eines vorgegebenen Vorgabedruckwerts zusätzlich das obere Luftkissen (11) befüllt wird.

6. Sitz nach Anspruch 5,
**dadurch gekennzeichnet,**
**daß** die Befüllung des oberen Luftkissens (11) bei 70% des maximalen Fülldrucks und die Entleerung des unteren Luftkissens (12) bei Erreichen eines vorgegebenen minimalen Fülldrucks gestoppt wird.

7. Sitz nach Anspruch 5 oder 6,
**dadurch gekennzeichnet,**
**daß** das Steuergerät (17) so ausgebildet ist, daß bei Betätigen der vierten Befehlstaste (29) gleichzeitig das obere Luftkissen (11) entleert und das untere Luftkissen (12) befüllt wird.

8. Sitz nach Anspruch 7,
**dadurch gekennzeichnet,**
**daß** die Befüllung des unteren Luftkissens bei 80% des maximalen zugelassenen Fülldrucks und die Entleerung des oberen Luftkissens (12) bei Erreichen eines vorgegebenen minimalen Fülldrucks abgebrochen wird.

9. Sitz nach einem der Ansprüche 5 - 8,
**dadurch gekennzeichnet,**
**daß** bei allen Veränderungen des Druckverhältnisses zwischen den beiden Luftkissen (11,12) das Verhältnis des Fülldrucks im oberen Luftkissen (11) zum Fülldruck im unteren Luftkissen (12) niemals kleiner als 0,25 ist.

10. Sitz nach einem der Ansprüche 5 - 7,
**dadurch gekennzeichnet,**
**daß** für das untere Luftkissen (11) ein maximaler Fülldruck von 200 hPa und für das obere Luftkissen (12) ein maximaler Fülldruck von 150 hPa vorgegeben ist und daß der minimale Fülldruck in beiden Luftkissen (11,12) auf 15 hPa festgelegt ist.

11. Sitz nach einem der Ansprüche 1 - 10,
**dadurch gekennzeichnet,**
**daß** die vier Befehlstasten (26-29) zu einer Kreuzwippe (22) zusammengefaßt sind.

## Claims

1. Seat with an adjustable contour, in particular a vehicle seat, with a back rest (10) and air cushions (11, 12) disposed one above the other as viewed across the back rest height in its lordosis region to form a lordosis contour, having a control device (17) for controlling the inflation pressure in the air cushions (11, 12) and having a control unit (20) connected to the control device (17) incorporating a first command button (26) for triggering a pressure increase and a second command button (27) for triggering a pressure decrease in the air cushions (11, 12),
**characterised in that**
the control unit (20) has a third and a fourth command button (28, 29) and the control device (17) is configured so that the ratio of the inflation pressures in the air cushions (11, 12) is varied relative to one another when the third or fourth command button (28, 29) is operated and the air pressures in the air cushions (11, 12) are simultaneously changed whilst the inflation pressure ratio remains unchanged when the first or second command button (26, 27) is operated.

2. Seat as claimed in claim 1,
**characterised in that**
the air cushions (11, 12) are simultaneously inflated when the first command button (26) is operated and simultaneously deflated when the second command button (27) is operated.

3. Seat as claimed in claim 1,
**characterised in that**
inflation of the air cushions (11, 12) is halted as soon as one of the air cushions (11, 12) reaches its maximum permissible inflation pressure and deflation is halted as soon as one of the air cushions (11, 12) reaches its pre-set minimum inflation pressure.

4. Seat as claimed in one of claims 1 - 3,
**characterised in that**
operation of the third command button (28) triggers an increase and operation of the fourth command button (29) triggers a decrease in the pressure ratio of the inflation pressures in the air cushions (11, 12).

5. Seat as claimed in claim 4,
**characterised in that**
two air cushions (11, 12) are provided and the control device (17) is configured so that when the third command button (28) is operated, the bottom air cushion (12) is firstly deflated and when a pre-defined pre-set pressure value is exceeded, the top air cushion (11) is inflated in addition.

6. Seat as claimed in claim 5,
**characterised in that**
inflation of the top air cushion (11) is halted on reaching 70% of the maximum inflation pressure and deflation of the bottom air cushion (12) is halted on reaching a pre-set minimum inflation pressure.

7. Seat as claimed in claim 5 or 6,
**characterised in that**
the control device (17) is configured so that when the fourth command button (29) is operated, the top air cushion (11) is deflated and the bottom air cushion (12) is simultaneously inflated.

8. Seat as claimed in claim 7,
**characterised in that**
inflation of the bottom air cushion is interrupted when 80% of the maximum permissible inflation pressure is reached and deflation of the top air cushion (12) is interrupted when a pre-set minimum inflation pressure is reached.

9. Seat as claimed in one of claims 5 - 8,
**characterised in that**
during all the changes to the pressure ratio between the two cushions (11, 12), the pressure ratio of the inflation pressure in the top air cushion (11) to the inflation pressure in the bottom air cushion (12) is never lower than 0.25.

10. Seat as claimed in one of claims 5 - 7,
**characterised in that**
a maximum inflation pressure of 200 hPa is fixed for the bottom air cushion (11) and a maximum inflation pressure of 150 hPa is set for the top air cushion (12) and the minimum inflation pressure in both cushions (11, 12) is fixed at 15 hPa.

11. Seat as claimed in one of claims 1 - 10,
**characterised in that**
the four command buttons (26-29) are combined in a rocker switch (22) with a cross-shaped layout.

## Revendications

1. Siège à profil réglable, en particulier siège de véhicule automobile, comportant un dossier (10) et des coussins gonflables (11, 12) qui sont destinés à former un profil de lordose et sont superposés dans la zone de lordose dudit siège, à savoir à hauteur des accoudoirs, et comportant un dispositif de réglage (17) destiné à régler la pression de gonflage des coussins gonflables (11, 12) et une unité de commande (20), qui est raccordée au dispositif de réglage (17) et qui comporte une première touche de commande (26) pour déclencher une augmentation de pression et une deuxième touche de commande (27) pour déclencher une diminution de pression dans les coussins gonflables (11, 12), **caractérisé en ce que** l'unité de commande (20) comporte une troisième et une quatrième touche de commande (28, 29) et **en ce que** le dispositif de réglage (17) est conçu de telle sorte que l'actionnement de la troisième ou de la quatrième touche de commande (28, 29) fait varier le rapport entre les pressions de gonflage dans les coussins gonflables (11, 12) de l'un par rapport à l'autre et l'actionnement de la première ou de la deuxième touche de commande (26, 27) fait varier en même temps les pressions d'air dans les coussins gonflables (11, 12) sans variation du rapport entre les pressions de gonflage.

2. Siège selon la revendication 1, **caractérisé en ce que** les coussins gonflables (11, 12) se remplissent en même temps au moment de l'actionnement de la première touche de commande (26) et se vident en même temps au moment de l'actionnement de la deuxième touche de commande (27).

3. Siège selon la revendication 2, **caractérisé en ce que** le gonflage des coussins gonflables (11, 12) est arrêté dès que la pression de gonflage maximale tolérée est atteinte dans l'un des coussins gonflables (11, 12) et **en ce que** le vidage est arrêté dès que la pression de gonflage minimale tolérée est atteinte dans l'un des coussins gonflables (11, 12).

4. Siège selon l'une quelconque des revendications 1 à 3, **caractérisé en ce que** l'actionnement de la troisième touche de commande (28) déclenche une augmentation et l'actionnement de la quatrième touche de commande (29) déclenche une diminution du rapport entre les pressions de gonflage dans les coussins gonflables (11, 12).

5. Siège selon la revendication 4, **caractérisé en ce qu'**il est prévu deux coussins gonflables (11, 12) et **en ce que** le dispositif de réglage (17) est conçu de telle sorte que l'actionnement de la troisième touche de commande (28) provoque d'abord le vidage du coussin gonflable inférieur (12) et le franchissement d'une limite inférieure d'une valeur de pression prédéfinie entraîne en plus le remplissage du coussin gonflable supérieur (11).

6. Siège selon la revendication 5, **caractérisé en ce que** le remplissage du coussin gonflable supérieur (11) est arrêté lorsque 70 % de la pression de gonflage maximale sont atteints et le vidage du coussin gonflable inférieur (12) est arrêté lorsqu'une pression de gonflage minimale prédéfinie est atteinte.

7. Siège selon la revendication 5 ou 6, **caractérisé en ce que** le dispositif de réglage (17) est conçu de telle sorte que, par l'actionnement de la quatrième touche de commande (29), le coussin gonflable supérieur (11) se vide en même temps que le coussin gonflable inférieur (12) se remplit.

8. Siège selon la revendication 7, **caractérisé en ce que** le remplissage du coussin gonflable inférieur (12) est interrompu lorsque 80 % de la pression de gonflage maximale tolérée sont atteints et le vidage du coussin gonflable supérieur (11) est interrompu lorsqu'une pression de gonflage minimale prédéfinie est atteinte.

9. Siège selon l'une quelconque des revendications 5 à 8, **caractérisé en ce que**, au moment de toutes les variations du rapport de pression entre les deux coussins gonflables (11, 12), le rapport entre la pression de gonflage dans le coussin gonflable supérieur (11) et la pression de gonflage dans le coussin inférieur (12) n'est jamais inférieur à 0,25.

10. Siège selon l'une quelconque des revendications 5 à 7, **caractérisé en ce qu'**une pression de gonflage maximale de 200 hPa est définie pour le coussin gonflable inférieur (12) et une pression de gonflage maximale de 150 hPa est définie pour le coussin gonflable supérieur (11) et **en ce que** la pression de gonflage minimale dans les deux coussins gonflables (11, 12) est fixée à 15 hPa.

11. Siège selon l'une quelconque des revendications 1 à 10, **caractérisé en ce que** les quatre touches de commande (26-29) sont regroupées pour former une touche bascule en croix (22).
